# EUROPEAN PATENT APPLICATION

(11) **EP 4 016 413 A1**
(43) Date of publication of application: **22.06.2022**
(21) Application number: 20216015.6
(22) Date of filing: 21.12.2020
(51) Int. Cl.: G06Q 10/06

(54) **BUILDING A PREDICTIVE MODEL FOR TELECOMMUNICATION NETWORKS**

(71) Applicant: Bull SAS, 78340 Les Clayes-sous-Bois (FR)
(72) Inventor: BENRACHI, Samia, 13127 VITROLLES (FR); WENSINK, Emmanuel, 3006 BERN (CH)
(74) Representative: Plasseraud IP

(57) **Abstract**

This invention relates to a method of building a predictive model of telecommunication network service assurance and/or of telecommunication network performance management and/or of service validation and/or of support and maintenance, comprising: assessing at least 4 different types of telecommunication network key performance indicators: a first type of telecommunication network indicators representative of physical and logical resources available in said telecommunication network, a second type of telecommunication network indicators representative of propagation and/or utilization characteristics in said telecommunication network, a third type of telecommunication network indicators representative of service quality and/or quality of experience observed in said network, a fourth type of telecommunication network key performance indicators representative of environmental parameters which impact telecommunication network equipment working and/or utilization conditions, performing a global non-deterministic analysis for all assessed 4 types of telecommunication network indicators, so as to identify key cross-relationships between different patterns of different types of telecommunication network indicators, tagging at least part of identified cross-relationships, according to one or more relevance criteria, designing said predictive model implementing said tagged cross-relationships, so as to improve anticipation performances of said predictive model.

## Description

### FIELD OF THE INVENTION

The invention relates to methods of building a predictive model of telecommunication network service assurance and/or of telecommunication network performance management and/or of service validation and/or of support and maintenance.

### BACKGROUND OF THE INVENTION

In telecommunication network, predictive models are built, to try and anticipate loads and failures. However, these predictive models often warn when it is already somewhat too late, and when corrective or adaptative action can no more have all positive and reactive effects which would be effective to correct or to adapt to a changing external situation. Therefore, it would be interesting to get at a predictive model which could really anticipate for corrective or adaptative action, so as any negative effect or so as to at least limit it as much as possible.

In some prior art, some families of key performance indicators are taken account, sometimes quite a long list of them. But each family of key performance indicators is managed alone, and possible interactions between several different families of key performance indicators are simply ignored. A disadvantage of this process lies in that when a specific family of key performance indicators has sufficiently evolved so as to trigger a warning or an alarm, again it is often somewhat too late for a corrective or adaptive action of limited extent to have full and complete positive effect.

### SUMMARY OF THE INVENTION

The object of the present invention is to alleviate at least partly the above mentioned drawbacks.

More particularly, the invention aims to try and take into account not only interactions between different key performance indicators of a same family, but also more hidden and more difficult to assess other types of possible interactions, which are possible interactions between different families of key performance indicators. However, these possible interactions between different families of key performance indicators, once assessed and implemented, may present the benefit of making the predictive model more able to anticipate changes and evolutions, so as to warn sufficiently early that limited corrective or adaptive action may have a full and complete positive effect in reaction to changes or evolutions of the monitored system.

By assessing and implementing key cross-relationships between different patterns of different types of telecommunication network indicators, the method of building a predictive model, according to the invention, leads to improved anticipation performances of the built predictive model.

It is not at all natural to try and take into account key cross-relationships between different patterns of different types of telecommunication network indicators, and especially between so many different types of key performance indicators, since such key cross-relationships are rather hidden and once discovered more difficult to implement.

This objective is achieved with a method of building a predictive model of telecommunication network service assurance and/or of telecommunication network performance management and/or of service validation and/or of support and maintenance, comprising: assessing at least 4 different types of telecommunication network key performance indicators: a first type of telecommunication network indicators representative of physical and logical resources available in said telecommunication network, a second type of telecommunication network indicators representative of propagation and/or utilization characteristics in said telecommunication network, a third type of telecommunication network indicators representative of service quality and/or quality of experience observed in said network, a fourth type of telecommunication network key performance indicators representative of environmental parameters which impact telecommunication network equipment working and/or utilization conditions, performing a global non-deterministic analysis for all assessed 4 types of telecommunication network indicators, so as to identify key cross-relationships between different patterns of different types of telecommunication network indicators, tagging at least part of identified cross-relationships, according to one or more relevance criteria, designing said predictive model implementing said tagged cross-relationships, so as to improve anticipation performances of said predictive model.

This method of building a predictive model can be applied in numerous different applications. Four examples of such applications will be given in the following text.

The method of building predictive models according to embodiments of the invention, uses non-deterministic, which implies without the use of network and service inventories, analytical models to perform predictive service assurance and performance management for telecommunication services. It assesses various key performance indicators in multiple dimensions taking into consideration performance of physical and logical resources, and network propagation characteristics, and observed service quality, and environmental measurements that impact network equipment conditions such as weather, humidity and temperature level for instance.

The predictive models are thus created with non-deterministic methods to identify key relationships between patterns of key performance indicators. As the analysis results, the most relevant relationships between key performance indicators are tagged and would be used for the real time analysis of data feeds as predictive models. Those predictive models allow to predict equipment failure, resource outage, quality of experience service degradation, provides tangible inputs for root cause analysis and diagnosis or auto corrective actions or optimized human resource planning.

Based on this modelling methodology, the predictive analytics models are applied to create service assurance and performance management use cases. Among those use cases, there can be ***equipment failure prediction and preventive maintenance, or predictive user Experience degradation, or diagnostics and auto correction, and WFM and fleet scheduling optimization,*** or any combination of preceding use cases, either total or partial.

Preferred embodiments comprise one or more of the following features, which can be taken separately or together, either in partial combination or in full combination.

Preferably, said predictive model is dedicated to **telecommunication network equipment failure prediction and to telecommunication network preventive maintenance.**

Such application is especially interesting since high anticipation within telecommunication network equipment failure prediction and telecommunication network preventive maintenance can avoid hard failure which then become hard and expensive to correct.

Preferably, said global non-deterministic analysis identifies the cross-combinations among said different types of indicators which are assessed as being the strongest predictors of resource failure.

Thereby the method building predictive model focuses on the most promising parameters with respect to resource failure prediction and to telecommunication network preventive maintenance.

Preferably, said predictive model is dedicated to **telecommunication network user experience degradation prediction.**

Such application is especially interesting since high anticipation within telecommunication network user experience degradation prediction can avoid hard degradation which then become hard and expensive to correct.

Preferably, said global non-deterministic analysis identifies the cross-combinations among said different types of indicators which are assessed as being the strongest predictors of declining quality of experience.

Thereby the method building predictive model focuses on the most promising parameters with respect to telecommunication network user experience degradation prediction.

Preferably, said predictive model is dedicated to **telecommunication network incident diagnostics and to telecommunication network incident autocorrection.**

Such application is especially interesting since high anticipation within telecommunication network incident diagnostics and to telecommunication network incident autocorrection can avoid hard incident which then become hard and expensive to correct.

Preferably, said global non-deterministic analysis: uses historical data for diagnostic values of the steps of diagnostic and auto correction workflows correlated to measured said indicators and to trouble ticket cause codes, produces a figure print per cause code, preferably updates said figure print per cause code, with a sliding window of said historical data.

Thereby the method building predictive model focuses on the most promising parameters with respect to telecommunication network incident diagnostics and to telecommunication network incident autocorrection.

Preferably, said predictive model is dedicated to **telecommunication network field service management and to telecommunication network fleet scheduling.**

Such application is especially interesting since high anticipation within telecommunication network field service management and to telecommunication network fleet scheduling can avoid hard mismatch which then become hard and expensive to correct.

Preferably, said global non-deterministic analysis: determines a combination of attributes which are associated with best resolution times by case category, issues to dispatchers a recommendation of a next best field services engineer for a give task considering the actual global schedule of all available field service engineers, defines rosters of planning and forecasting actions by taking into account resolution rates and case trends.

Thereby the method building predictive model focuses on the most promising parameters with respect to telecommunication network field service management and to telecommunication network fleet scheduling.

Preferably, said predictive model is dedicated **to testing process and/or to service validation.** This allows for anticipating even more.

Preferably, said global non-deterministic analysis is based on global cluster analysis encompassing all 4 said types of indicators and mixing together either all 4 said types of indicators or at least several among 4 said types of indicators. This global cluster analysis is indeed much richer than could be any local cluster analysis respectively based on a single type of indicators, and even richer than could be all the different local cluster analysis each of them being respectively based on a single type of indicators.

Preferably, said global non-deterministic analysis is based on k-means clustering or on Random Forest clustering. K-means is a clustering technique presenting a good compromise between efficiency and simplicity. Random Forest clustering is a clustering technique presenting a good compromise between efficiency and simplicity.

Preferably, said predictive model is a real time predictive model. Being real time further helps to anticipate even earlier.

Preferably, said fourth type of indicators comprises: temperature, and/or humidity. This can be temperature of environment or temperature of network equipment within a specific environment. This can be humidity of environment or humidity of network equipment within a specific environment.

Service assurance, in telecommunications, can be the application of policies and processes by a Communications Service Provider (CSP) to ensure that services offered over networks meet a pre-defined service quality level for an optimal subscriber experience. The practice of service assurance enables CSPs to identify faults in the network and resolve these issues in a timely manner so as to minimize service downtime. The practice also includes policies and processes to proactively pinpoint, diagnose and resolve service quality degradations or device malfunctions before subscribers are impacted.

Performance Management refers to Technical Performance Management. Technical Performance Management focuses on parameters such as CPU load, Network Throughput, Connection setup time etc. These metrics can be early warning of an eventual system failure and/or decline in service quality.

The technical meaning of maintenance can involve functional checks, servicing, repairing or replacing of necessary IT Systems & software, both active and passive Network equipment, as well a supporting infrastructure. These activities occur either before or after a failure.

The objective of Service Validation and Testing can be to ensure that deployed Releases and the resulting services meet customer expectations. The central approach here is to provide end-2-end testing of services (i.e. form service delivery platform to end user). In this way all elements in the service delivery chain (IT infrastructure, passive & active network elements, and end user equipment) are verified. Such tests can provide valuable inputs for the calibration of the overall analytical model and can be built in as part of a feedback loop allowing continuous monitoring and improvement of the service delivery chain. This will ensure that new or changed services are fit for purpose (this is known as utility) and fit for use (this is known as warranty). Service Validation and Testing's goal is to make sure the delivery of activities adds value that is agreed and expected.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows a graphical representation of key performance indicators representative of telecommunication network equipment failure prediction and to telecommunication network preventive maintenance, as a function of time.
Fig. 2 shows a graphical representation of key performance indicators representative of telecommunication network user experience degradation prediction, as a function of time.
Fig. 3 shows a graphical representation of key performance indicators representative of telecommunication network incident diagnostics and to telecommunication network incident autocorrection, as a function of time.
Fig. 4 shows a graphical representation of key performance indicators representative of telecommunication network field service management and to telecommunication network fleet scheduling, as a function of time.

### DETAILED DESCRIPTION OF THE INVENTION

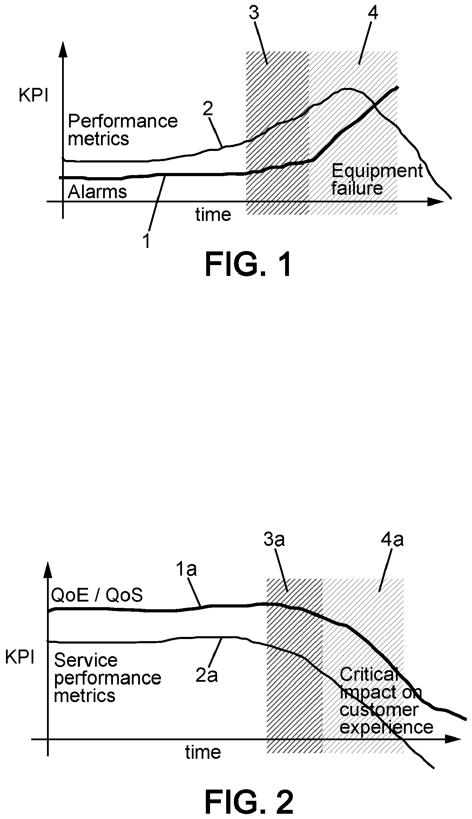

Fig. 1 shows a graphical representation of key performance indicators representative of telecommunication network equipment failure prediction and to telecommunication network preventive maintenance, as a function of time.

This graphical representation shows schematically key performance indicators (KPI) as a function of time. There is a first curve 1 showing alarms, representative of what corresponds to monitoring of numerous types of key performances indicators but without cross relations between them. There is a second curve 2 showing performance metrics, representative of what corresponds to monitoring of several types of key performance indicators but implementing some cross relations between the different types of key performance indicators.

The warning given by curve 1 is quite late, since it significantly evolves only in the zone 4 when the first signs of equipment failure already happen. The warning given by curve 2 is rather early, since it significantly evolves already in the zone 3 in advance of the zone 4, zone 3 being when the first signs of equipment failure are still far away, but the cross relations already reveal that if no corrective or adaptative action is taken right now, then situation will become degraded and the situation will go towards starting equipment failure. The increase of curve 2 already in zone 3, as compared to the increase of curve 1 only in zone 4, shows graphically how taking into account cross relations allows for much better anticipation.

The prediction of equipment failure is particularly useful for mobile access and core network, for example Network cards, ports, IT systems, which are used in core and mobile access network. The objective is to reduce downtime caused by forecasting an impending outage.

The underlying principle of the analytical model is that a system failure is preceded by a degradation of the equipment performance which may not immediately have an impact on the provided services. The figure 1 shows a graphical representation of this relationship. The zone 3 in the diagram is the area in which specific performance indicators will provide an early warning of impending resource failure. The zone 4 in the diagram is the zone in which the resource failure starts to have an impact on the delivered services, for instance voice or data services.

The aim of the algorithm used by the invention is to identify the combination of key performance indicators, equipment make and configuration, and environmental attributes which can provide an early warning of an impending resource failure, which triggers in the zone 3, and to monitor the performance and system alarms to identify impending resource failures and to trigger early remedial action.

In order to build the predictive model, some analytical techniques, such as k-means clustering or Random Forest, will be used to identify the combinations of attributes which form the strongest predictors of resource failure. These parameters may vary depending on the nature of the equipment, therefore the outcome of this first step of identification will be a matrix of indicators grouped for example by resource type, by manufacturer and by model.

Model's performance can be measured by the accuracy in the early prediction of equipment failures likely to cause service outages and/or by the reduction on traffic loss due to system outages.

In order to build up such a predictive model, some data sources are required, and they are listed just below:
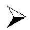 System performance logs: sessions, connections, threads, CPU, disk, memory, ...
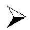 System alarms: equipment alarms, fault management system information,
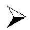 Trouble ticket: ticketing system information,
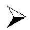 Resource inventory: make / model / manufacturer, configuration parameters,
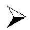 Environmental data: temperature, humidity of equipment facilities and of local weather.

Depending on the specific predictive model encompassed, all preceding data sources or only part of these preceding data sources, may be required.

The outcomes are the list of equipment and probability of failure that could be delivered in dashboard, and/or the automated integration into the ticketing system to trigger preventative maintenance tasks based on recommendations.

Fig. 2 shows a graphical representation of key performance indicators representative of telecommunication network user experience degradation prediction, as a function of time.

This graphical representation shows schematically key performance indicators as a function of time. There is a first curve 1a showing quality of experience (QoE) and/or quality of service (QoS), representative of what corresponds to monitoring of numerous types of key performance indicators but without cross relations between the different types of key performance indicators. There is a second curve 2a showing service performance metrics, representative of what corresponds to monitoring of several types of key performances indicators but implementing some cross relations between them.

The warning given by curve 1a is quite late, since it significantly evolves only in the zone 4 when the first signs of quality loss already happen. The warning given by curve 2a is rather early, since it significantly evolves already in the zone 3a in advance of the zone 4a, zone 3a being when the first signs of quality loss are still far away, but the cross relations already reveal that if no corrective or adaptative action is taken right now, then situation will become degraded and the situation will go towards starting quality loss. The drop of curve 2a already in zone 3a, as compared to the drop of curve 1a only in zone 4a, shows graphically how taking into account cross relations allows for much better anticipation.

The objective is to predict Quality of Experience (QoE) for all services problems for all or part of customer segment, what is particularly useful for the high value segment.

The analytical model works on the principle that Quality of Experience is related to specific combinations of service key performance indicators. Service Performance indicators provide early warning that there may be a critical impact on the customer experience.

The figure 2 shows a graphical representation of this relationship between key performance indicators and perceived decline in Quality of Experience. The zone 3a in the diagram is the area in which specific service key performance indicators will provide an early warning of reduced Quality of Experience and/or of Quality of Service. The zone 4a is the zone in which the Quality of Experience and/or of Quality of Service is noticeably reduced and is likely to cause a customer complaint.

The analytical model will learn which Service performance metrics are the key indicators of declining Quality of Experience and/or of Quality of Service by analysing historical data of service performance and customer trouble tickets, and then by applying this model to the real time network key performance indicators, in order to predict declining Quality of Experience and/or of Quality of Service for selected customers.

In order to build the predictive model, some analytical techniques, such as k-means clustering & Random Forest, will be used in order to identify the combinations of attributes which form the strongest predictors of declining Quality of Experience and/or of Quality of Service.

Model's performance could be measured by the accuracy in predicting customer experience degradation, Improvements in CSAT, NPS, and reduction in calls to call centre.

Quality of Experience is a measurement which can be derived from numerous technical key performance indicators, and the exact combination of key performance indicators will vary, depending on the service which is being measured, for instance be it TDM Voice, VoIP, IP-TV, or other services. A common method is to express this in terms of a Mean Opinion Score (MOS) for the particular service.

In order to be able to correlate the Quality of Experience to specific subscribers, several approaches are possible. Either, the use of network element performance data (Syslogs) can be used to determine the aggregated Quality of Experience in a given area. This applies to all subscribers located on the area at a given time. In order to determine the Quality of Experience for specific subscribers, it this then useful to correlate this with the subscriber location data, which in turn is available from numerous components of the network. Or the use of passive probes on the core network interfaces, since these data can provide for all the required key performance indicators, in order to calculate the Quality of Experience for individual subscriber sessions. Or even, for IMS based services, for instance VoIP, use of SIP signalling codes, provided by the IMS platform. Or even, DPI approach based on the guide user interface. This approach works to calculate Quality of Experience for IP based services.

To perform what precedes, the following data sources, which can be used, either in full combination or in partial combination, are:
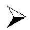 network key performance indicators, depending on which of the alternative approaches described earlier, has been chosen, the used data sources will vary,
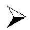 trouble tickets relating so service quality problems.

The outcomes are a list of subscribers in critical state, list of subscribers which could be submitted to an automated trouble shooting tool for further diagnostics and corrective actions.

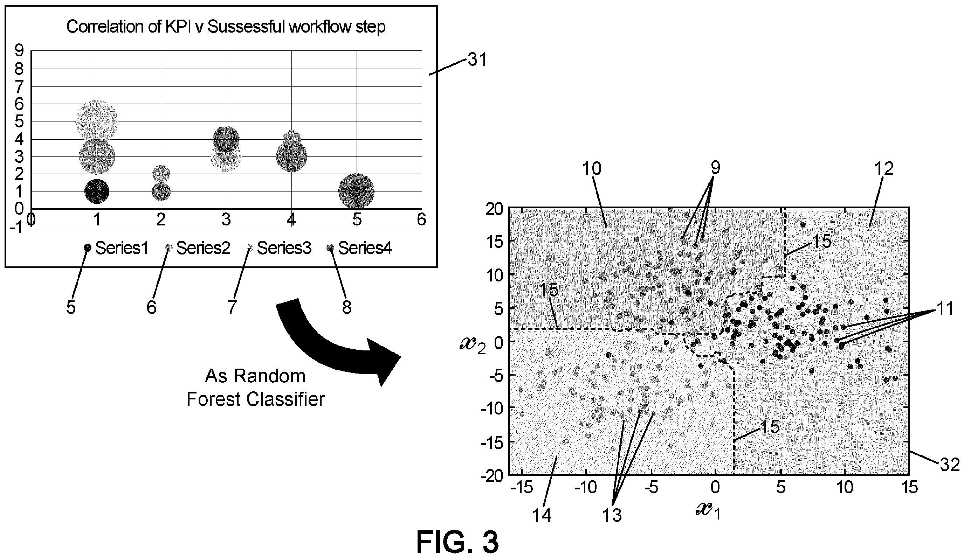

Fig. 3 shows a graphical representation of key performance indicators representative of telecommunication network incident diagnostics and to telecommunication network incident autocorrection, as a function of time.

This graphical representation shows schematically first an array 31 and second a map 32. The array 31 shows correlation between on the one side key performance indicators and on the other side successful workflow steps. Different types of correlation are shown, a type 5, a type 6, a type 7, a type 8, each type being represented a specific way in the array 31. These different types of correlation may be stronger or weaker, depending on the size of the circles showing the importance of the correlation, bigger circles showing a stronger correlation, whereas smaller circles showing a weaker correlation.

With use of a Random Forest Classifier, we can get the map 32. In the map 32, a border 15 clearly separates the space into 3 different zones, first zone 10 where nearly all points 9 are of a first type, second zone 12 where nearly all points 11 are of a second type, third zone 14 where nearly all points 13 are of a third type. Very few points of second type are to be seen within first zone 10 or within third zone 14. Very few points of third type are to be seen within first zone 10 or within second zone 12. Very few points of first type are to be seen within second zone 12 or within third zone 14. The zones 10, 12, 14 have been limited so as to contain practically only their own type of points. The map 32 is a useful tool to determine the cross relations between types of key performance indicators, which in turn appear to be most useful to build up predictive models which present better performances than the classical predictive models.

The objective is to improve the efficiency of the diagnostic and auto correction workflows in an automated trouble shooting tool, by identifying the most effective workflow steps for a given case and by identifying trends in terms of new or unresolved cases.

It is used to perform automated diagnostics and resolution, for telecommunication service such as High Speed internet services & IPTV as well as Mobile & VAS and roaming services. This is performed as diagnostic workflows with testing steps per workflow in which various components of the delivery chain are automatically tested.

In the current configuration workflows can be triggered by various feeds such as the following ones, used in full combination or in partial combination:
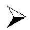 customer trouble tickets or service requests initiated through either the call centre or through one of the automated customer care channels,
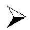 Quality of Experience measurements from the network probes.

The workflow will then perform quite a number of diagnostic tests in the network, in order to determine if any configuration changes are necessary. In case the tests indicate that remote configuration changes are required or even only useful, these will be performed automatically. In case the tests are non-conclusive or indicate that a site visit is required, then a field service request will be initiated.

The analytical model will analyze the input reasons, the diagnostic results for workflow steps and the resulting actions, in order to learn the most effective workflow steps in relation to a given problem and also to identify new problems which are not currently handled adequately by the workflows.

The figure 3 shows a schematic view of how cluster analysis techniques such as a random forest classifier can be used to identify workflow steps which most closely correspond successful resolution of cases.

This model will be applied in a process performing successively two steps. First a descriptive analytics step, where the predictive model will be built using historical data for diagnostic values of the workflow steps correlated to the measured key performance indicators and trouble ticket cause code. This will produce a "figure print" per cause code. The model will be periodically rebuilt using a sliding window of historical data. Second, a predictive analytics step, where the model will be applied to incoming tickets and service requests, in order to provide a recommendation in terms of which workflow steps, for instance diagnostic & corrective action, should be prioritized. This recommendation is then provided as input to the motive workflow.

Model's performance could be measured by simplifying the workflows and improve the accuracy of the corrective actions by using Artificial Intelligence to analyse the incoming trouble tickets and the Service requests along with the outgoing workflow results to identify the best workflows for given symptoms, what can be measured in terms of:
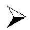 reducing the number of diagnostic steps necessary to isolate a problem,
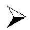 and/or reduce the number of cases in which a field service request is incorrectly initiated.

To reach this objective, the following data sources can be used, either in full combination or in partial combination:
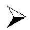 trouble ticket & service requests: tickets, ID, symptoms, ...
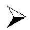 Automated trouble shooting tool: workflow reports,
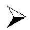 DPI metrics: IP session key performance indicators such as for instance Quality of Experience indicators.

The outcomes, which are recommended, are automated trouble shooting workflow steps, and/or list of subscriptions with probable failure, and/or list of products with probable failure, and/or failed diagnosis workflows.

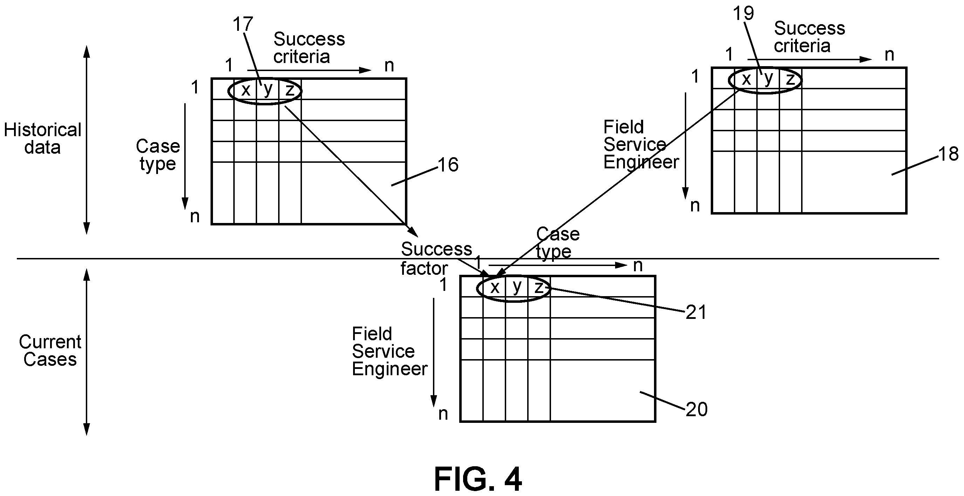

Fig. 4 shows a graphical representation of key performance indicators representative of telecommunication network field service management and to telecommunication network fleet scheduling, as a function of time.

This graphical representation shows schematically historical data which are used to be applied to current cases.

Historical data include a first matrix 16 and a second matrix 18. First matrix 16 represents the success factor 17 between different case types and different success criteria. Second matrix 18 represents the success factor 19 between different field service engineers and different success criteria.

Currents cases include a third matrix 20 got from the combination performed between first matrix 16 and second matrix 18. Therefore, combined third matrix 20 represents the success factor 21 between different field service engineers and different case types.

The aim is to optimize Field Service Management through the use of Artificial Intelligence, in order to support the manual scheduling process, to identify ways to improve the speed and efficiency of problem resolution tasks and to identify ways to improve rosters.

Field Service Management (FSM), which is responsible for the orchestration and scheduling of field engineering intervention for customer services, covers both consumer and business markets. Tasks are initiated through either service requests or trouble tickets.

The two key functional areas under consideration may be:
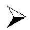 First, schedule optimization. Field engineer schedules are generated once per day based on optimization process which takes tasks, skills, availability and location into consideration. However, during the day, high percentage of the tasks need to be rescheduled based on actual situation in the field, for instance customer unavailable, diagnosis not complete, equipment unavailable, etc. Rescheduling is done manually by dispatchers and is not fully optimized. Field Service Engineers are supported by a pool of drivers and cars, who ferry the engineers from one appointment to the other. This is coordinated though an internal car booking application, which can follow for example the same principles as the well-known Uber system.
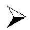 Second, roster optimization. Rosters are the outcome of the planning and forecasting actions. This takes into consideration forecasting field force needs, based on seasonal fluctuations and growing trends, by region, engineer, team, product and by service.

The analytical model may perform the following tasks:
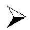 Determine the combination of attributes which are associated with the best resolution times by case category,
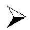 Support the dispatchers by recommending the next best Field Services Engineer for a given task considering the actual global schedule of all available Field Services Engineers,
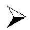 Support optimizations by defining rosters by taking into consideration resolution rates and case trends.

The approach will be used to generate case types based on the technical and geographical criteria of the cases, along with a calculated success criteria per case type for each Field Services Engineer. The two matrices 16 and 18 are then combined to determine the next best engineer based on case type and success criteria, giving a third matrix 20. This approach is shown schematically in the figure 4.

The figure 4 is given as an example, which may be adapted based on the available data from the listed data sources.

The roster optimization may require a separate model to forecast load and capacity demands for the various case types, taking into consideration factors such as vacation.

Model's performance could be measured by reducing dispatcher to engineer ratio by a significant duration, improving the resolution speed by helping to identify best practices amongst the Field Service Engineers, improving rostering by better identifying the ongoing trends and demands for Field Service interventions.

The following data sources are taken into consideration for this use case. However, a detailed analysis of the available data and its structure may be first be required, in order to determine whether this data is to be used.

These following data sources, which can be used in full combination, or in partial combination, can be:
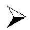 Field Service Engineer schedules,
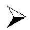 Service request details, time to resolve, resolution record,
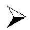 Inventory and assets,
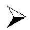 Calendars (vacations, availability),
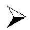 Skills profiles for field engineers,
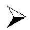 Locations and zones of tasks,
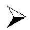 Locations of Field Service Engineers,
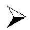 Drivers locations and schedules,
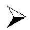 Traffic and congestion information.

The outcomes may be:
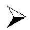 For scheduling tasks, a recommendation of the next most suitable Field Services Engineer for a given case type,
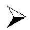 For Roster optimisation, a forecast of the numbers of each case type.

The invention has been described with reference to preferred embodiments. However, many variations are possible within the scope of the invention.

## Claims

1. Method of building a predictive model of telecommunication network service assurance and/or of telecommunication network performance management and/or of service validation and/or of support and maintenance, comprising:
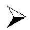 assessing at least 4 different types of telecommunication network key performance indicators:
∘ a first type of telecommunication network indicators representative of physical and logical resources available in said telecommunication network,
∘ a second type of telecommunication network indicators representative of propagation and/or utilization characteristics in said telecommunication network,
∘ a third type of telecommunication network indicators representative of service quality and/or quality of experience observed in said network,
∘ a fourth type of telecommunication network key performance indicators representative of environmental parameters which impact telecommunication network equipment working and/or utilization conditions,
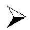 performing a global non-deterministic analysis for all assessed 4 types of telecommunication network indicators, so as to identify key cross-relationships between different patterns of different types of telecommunication network indicators,
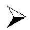 tagging at least part of identified cross-relationships, according to one or more relevance criteria,
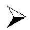 designing said predictive model implementing said tagged cross-relationships, so as to improve anticipation performances of said predictive model.

2. Method of building a predictive model, according to claim 1, wherein said predictive model is dedicated to telecommunication network equipment failure prediction and to telecommunication network preventive maintenance (1, 2, 3, 4).

3. Method of building a predictive model, according to claim 2, wherein said global non-deterministic analysis identifies the cross-combinations among said different types of indicators which are assessed as being the strongest predictors of resource failure.

4. Method of building a predictive model, according to claim 1, wherein said predictive model is dedicated to telecommunication network user experience degradation prediction (la, 2a, 3a, 4a).

5. Method of building a predictive model, according to claim 4, wherein said global non-deterministic analysis identifies the cross-combinations among said different types of indicators which are assessed as being the strongest predictors of declining quality of experience.

6. Method of building a predictive model, according to claim 1, wherein said predictive model is dedicated to telecommunication network incident diagnostics and to telecommunication network incident autocorrection (31, 32).

7. Method of building a predictive model, according to claim 6, wherein:
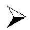 said global non-deterministic analysis:
∘ uses historical data for diagnostic values of the steps of diagnostic and auto correction workflows correlated to measured said indicators and to trouble ticket cause codes,
∘ produces a figure print per cause code,
∘ preferably updates said figure print per cause code, with a sliding window of said historical data.

8. Method of building a predictive model, according to claim 1, wherein said predictive model is dedicated to telecommunication network field service management and to telecommunication network fleet scheduling (16, 18, 20).

9. Method of building a predictive model, according to claim 8, wherein:
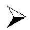 said global non-deterministic analysis:
∘ determines a combination of attributes which are associated with best resolution times by case category,
∘ issues to dispatchers a recommendation of a next best field services engineer for a give task considering the actual global schedule of all available field service engineers,
∘ defines rosters of planning and forecasting actions by taking into account resolution rates and case trends.

10. Method of building a predictive model, according to claim 1, wherein said predictive model is dedicated to testing process and/or to service validation.

11. Method of building a predictive model, according to any preceding claim, wherein said global non-deterministic analysis is based on global cluster analysis encompassing all 4 said types of indicators and mixing together either all 4 said types of indicators or at least several among 4 said types of indicators.

12. Method of building a predictive model, according to any preceding claim, wherein said global non-deterministic analysis is based on k-means clustering or on Random Forest clustering.

13. Method of building a predictive model, according to any preceding claim, wherein said predictive model is a real time predictive model.

14. Method of building a predictive model, according to any preceding claim, wherein:
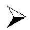 said fourth type of indicators comprises:
∘ temperature,
∘ and/or humidity.
